# EUROPEAN PATENT APPLICATION

(11) **EP 4 187 870 A1**
(43) Date of publication of application: **31.05.2023**
(21) Application number: 22209755.2
(22) Date of filing: 25.11.2022
(51) Int. Cl.: H04L 47/283, H04L 45/24

(54) **DATA PROCESSING METHOD, PACKET SENDING METHOD, AND APPARATUS**

(30) Priority: 26.11.2021 CN 202111425811
(71) Applicant: Huawei Technologies Co., Ltd., Shenzhen, Guangdong 518129 (CN)
(72) Inventor: ZHENG, Xiaoliang, Shenzhen, 518129 (CN); REN, Shoushou, Shenzhen, 518129 (CN); MENG, Rui, Shenzhen, 518129 (CN); SHI, Weidi, Shenzhen, 518129 (CN)
(74) Representative: Gill Jennings & Every LLP

(57) **Abstract**

Embodiments of this application provide a data processing method, a packet sending method, and an apparatus, to unify delay jitter ranges of different transmission paths and better control jitter of a packet flow. The data processing method includes: A first device obtains a first periodicity parameter and a second periodicity parameter, where the first periodicity parameter is determined based on duration of transmitting a packet from a first network device to a second network device along a first path, and the second periodicity parameter is determined based on duration of transmitting a packet from the first network device to the second network device along a second path; and the first device determines a third periodicity parameter based on the first periodicity parameter and the second periodicity parameter, where the third periodicity parameter reflects a quantity of periodicities between a periodicity in which the first network device sends a data packet and a periodicity in which the second network device forwards the data packet, the data packet belongs to a packet flow, and the packet flow is transmitted along the first path and the second path.

## Description

### TECHNICAL FIELD

This application relates to the field of communication technologies, and in particular, to a data processing method, a packet sending method, and an apparatus.

### BACKGROUND

Jitter of a packet flow reflects variation between delay values of a plurality of packets in the packet flow. Larger jitter of the packet flow indicates a larger difference between a maximum delay value and a minimum delay value of a packet in the packet flow. Particularly, in an ultra-reliable low-latency communication (Ultra-reliable Low-Latency Communication, URLLC) application scenario using the 5th-generation mobile communication technology (5th Generation Mobile Communication Technology, 5G), a requirement for the jitter is clearly specified.

Currently, the jitter of the packet flow may be controlled within a preset range by controlling a time interval between time points at which a plurality of network devices transmitting a same packet flow. sends a packet. In this way, time for transmitting the packet between the network devices is controlled within a specific range, so that total time for transmitting the packet through a transmission path can be within a preset range, to control the jitter of the packet flow.

In the foregoing technical solution, the packet in the packet flow needs to be forwarded by one or more specific network devices, indicating that the packet flow is transmitted along a preset transmission path. If a fault occurs on a network device on the transmission path of the packet flow, the jitter of the packet flow may not be controlled within the preset range.

### SUMMARY

Embodiments of this application provide a data processing method, a packet sending method, and an apparatus, to unify delay jitter ranges of different transmission paths and thus better control jitter of a packet flow.

According to a first aspect, an embodiment of this application provides a data processing method. The method may be executed by a first device. The first device may be a network device configured to forward a data packet in a network system, or may be a device such as a controller in the network system. Specifically, the method includes the following steps: The first device first obtains a first periodicity parameter and a second periodicity parameter. The first periodicity parameter is determined based on duration of transmitting a packet from a first network device to a second network device along a first path, and the second periodicity parameter is determined based on duration of transmitting a packet from the first network device to the second network device along a second path. In other words, the first periodicity parameter and the second periodicity parameter may respectively correspond to a delay value of the first path and a delay value of the second path. After determining the first periodicity parameter and the second periodicity parameter, the first device may determine a third periodicity parameter based on the first periodicity parameter and the second periodicity parameter. The third periodicity parameter reflects a quantity of periodicities between a periodicity in which the first network device sends a data packet and a periodicity in which the second network device forwards the data packet, and the data packet is a packet in a packet flow transmitted through the first path and the second path. In other words, for the packet flow transmitted through the first path and the second path, a quantity of periodicities between a periodicity to which a time point at which any data packet is sent by the first network device belongs and a periodicity to which a time point at which the data packet is sent by the second network device belongs corresponds to the third periodicity parameter. In other words, a time point at which the first network device sends a data packet is related to a time point at which the data packet is sent by the first network device and the third periodicity parameter, and is irrelevant to a transmission path through which the data packet passes between the first network device and the second network device. In addition, because the third periodicity parameter is determined based on the first periodicity parameter and the second periodicity parameter, a quantity of periodicities that corresponds to the third periodicity parameter is greater than a quantity of periodicities between a periodicity to which a time point at which the second network device receives the data packet belongs and the periodicity to which the time point at which the first network device sends the data packet belongs, so that the data packet can be normally forwarded. In this way, a fluctuation range of a delay value of the packet flow between the first network device and the second network device depends on the third periodicity parameter, and is irrelevant to a transmission path of the packet flow. In this way, the fluctuation range of the delay value of the packet flow between the first network device and the second network device may not be affected by the transmission path of the packet, to control jitter of the packet flow.

In a possible design, the first device may delay a time point at which the packet is sent, so that packets sent by the first network device in a same periodicity are sent by the second network device in a same periodicity. Specifically, the first device may determine the third periodicity parameter based on a larger periodicity parameter of the first periodicity parameter and the second periodicity parameter. In this way, regardless of whether the data packet is transmitted through the first path or the second path, the quantity of periodicities between the periodicity to which the time point at which the first network device sends the data packet belongs and the periodicity to which the time point at which the second network device receives the data packet belongs is less than the quantity of periodicities that corresponds to the third periodicity parameter. In this way, the second network device may receive the data packet before a periodicity corresponding to the third periodicity parameter, so that the data packet can be normally transmitted.

In a possible design, the first periodicity parameter and the second periodicity parameter may be determined based on a plurality of hop-by-hop periodicity parameters, where the hop-by-hop periodicity parameter may reflect a quantity of periodicities between time points at which the data packet is sent by two directly connected network devices. Specifically, the first device may be a controller, and is configured to receive the plurality of hop-by-hop periodicity parameters reported by a plurality of network devices in a network system. Then, the first device may select, from the plurality of hop-by-hop periodicity parameters based on a topology structure of the first path, a plurality of target hop-by-hop periodicity parameters corresponding to the first path, and determine the first periodicity parameter based on the plurality of target hop-by-hop periodicity parameters. The target hop-by-hop periodicity parameter is a quantity of periodicities between periodicities corresponding to time points at which two adjacent network devices on the first path send a same packet. Optionally, the first device may also determine the second periodicity parameter based on a similar method.

In a possible design, the first device may generate a first correspondence based on the third periodicity parameter, where the first correspondence includes a correspondence between an identifier of the packet flow and the third periodicity parameter. In this way, when the data packet in the packet flow is forwarded, a periodicity of sending the packet may be determined based on the first correspondence, so that the jitter of the packet flow is controlled within a preset range.

In a possible design, if the first device is the first network device, the first device may add, to the data packet in the packet flow, a periodicity to which a time point at which the packet is sent belongs. Specifically, a first packet included in the packet flow is used as an example. The first device may add an identifier of a first periodicity to the first packet. Then, the first device may send the first packet through the first path in the first periodicity, and/or the first device may send the first packet through the second path in the first periodicity. In addition, the first packet may further include a first sequence identifier, used to identify a sequence of the first packet in the packet flow, and used by the second network device to selectively send a packet received through the first path and/or the second path.

In a possible design, if the first device is the first network device, the first device may further add, to the data packet in the packet flow, the periodicity to which the time point at which the data packet is sent by the second network device belongs. Specifically, the first packet included in the packet flow is used as an example. It is assumed that a time point at which the first packet is sent by the first network device belongs to the first periodicity, before sending the first packet, the first device may first determine an identifier of a second periodicity based on the identifier of the first periodicity and the third periodicity parameter, and add the identifier of the second periodicity to the first packet. The second periodicity is a periodicity to which a time point at which the second network device forwards the first packet belongs. In this way, after receiving the first packet, the second network device may determine, based on the identifier of the second periodicity that is carried in the first packet, the time point at which the first packet is forwarded, and forward the first packet in the second periodicity.

In a possible design, if the first device is the first network device, the first device may determine the first periodicity parameter and the second periodicity parameter by sending a detection packet. Specifically, the first periodicity parameter is used as an example. The first device may generate a first detection packet including an identifier of a third periodicity, and send the first detection packet through the first path in the third periodicity. For example, if a next-hop network device of the first network device on the first path is a third network device, the first device may send the first detection packet to the third network device in the third periodicity. In this way, a network device on the first path may determine a periodicity parameter based on the identifier of the third periodicity, and send the periodicity parameter to the first device, so that the first device determines the first periodicity parameter corresponding to the first path.

In a possible design, if the first device is the second network device, the first device may determine, based on the third periodicity parameter, the time point at which the data packet is sent. Specifically, a second packet included in the packet flow is used as an example, the first network device may add, to the second packet, an identifier of a periodicity to which a time point at which the second packet is sent belongs, where the identifier is referred to as an identifier of a fourth periodicity below. After receiving the second packet, the first device may determine an identifier of a fifth periodicity based on the identifier of the fourth periodicity and the third periodicity parameter, to forward the second packet in the fifth periodicity. In this way, regardless of whether the second packet is transmitted between the first network device and the second network device through the first path or the second path, the second packet may be forwarded by the first device in the fifth periodicity, so that the fluctuation range of the delay value of the packet flow between the first network device and the second network device may not be affected by the transmission path of the packet, to control the jitter of the packet flow.

In a possible design, if the first device is the second network device, the first device may selectively receive and/or selectively send a packet based on a sequence identifier carried in the data packet. Specifically, a second packet included in the packet flow is used as an example. The second packet may include a second sequence identifier for identifying a sequence of the second packet in the packet flow. After receiving the second packet, the first device may determine whether a data packet corresponding to the second sequence identifier has been forwarded. If the data packet corresponding to the second sequence identifier has not been forwarded, the first device may forward the second packet in the fifth periodicity. In this way, even if the first device receives two second packets respectively through the first path and the second path, the first device may select, based on the second sequence identifier, one second packet from the two second packets to forward.

In a possible design, if the first device is the second network device, the first device may determine the first periodicity parameter and the second periodicity parameter based on a detection packet. Specifically, the first periodicity parameter is used as an example. The first device may receive a second detection packet, where the second detection packet may be sent by the first network device to the first device through the first path in a sixth periodicity, and the second detection packet may include an identifier of the sixth periodicity. Then, the first device may determine the first periodicity parameter based on the identifier of the sixth periodicity and a time point at which the second detection packet is received.

In a possible design, if the first device is the second network device, the first device may determine the hop-by-hop periodicity parameter based on a detection packet. Specifically, the first device may receive a third detection packet, where the third detection packet may be sent by a fourth network device to the first device through the first path in a seventh periodicity. The fourth network device may be a previous-hop network device of the first device, and the third detection packet may include an identifier of the seventh periodicity. Then, the first device may determine a first hop-by-hop periodicity parameter based on the identifier of the sixth periodicity and the time point at which the second detection packet is received. The first hop-by-hop periodicity parameter indicates a quantity of periodicities between a periodicity to which a time point at which the fourth network device sends a data packet belongs and a periodicity to which a time point at which the first network device sends the data packet belongs. Optionally, after determining the first hop-by-hop periodicity parameter, the first device may store the first hop-by-hop periodicity parameter and an identifier of the fourth network device in an associated manner, or store the first hop-by-hop periodicity parameter and an identifier of a third path in an associated manner. The third path may be a subpath between the fourth network device and the first network device.

In a possible design, if the first device is a control plane device, after determining the first correspondence, the first device may send the first correspondence to the first network device and/or the second network device, so that the first network device and/or the second network device forward/forwards the data packet in the packet flow based on the third periodicity parameter.

According to a second aspect, an embodiment of this application provides a packet sending method. The packet sending method may be executed by a first network device, and at least two transmission paths, a first path and a second path, are included between the first network device and a second network device. The packet sending method specifically includes: The first network device obtains a first correspondence, where the first correspondence may include a correspondence between an identifier of a packet flow and a first periodicity parameter. The first periodicity parameter may reflect a quantity of periodicities between a periodicity in which the first network device sends a data packet in the packet flow and a periodicity in which the second network device forwards the data packet. Then, the first network device may send a first data packet to the second network device separately through the first path and the second path in a first periodicity. The first correspondence may be the first correspondence described in the first aspect, the first periodicity parameter may be the third periodicity parameter described in the first aspect, and the first data packet belongs to the packet flow and includes an identifier of the first periodicity. In this way, after receiving the first data packet, the second network device may determine, based on the identifier of the first periodicity that is included in the first data packet, a periodicity in which the first data packet is forwarded, to forward the first data packet in a corresponding periodicity. In this way, a fluctuation range of a delay value of the packet flow between the first network device and the second network device may not be affected by a transmission path of the packet, to control jitter of the packet flow.

In a possible design, the first data packet may further include an identifier of a second periodicity, for indicating the second network device to forward the data packet in the second periodicity. Specifically, the first network device may first determine, based on the first periodicity parameter and the identifier of the first periodicity, a periodicity to which a time point at which the second network device forwards the first data packet belongs, that is, the second periodicity. Then, the first network device may add the identifier of the second periodicity to the first data packet, so that the second network device forwards the first data packet in the second periodicity based on the identifier of the second periodicity after receiving the first data packet.

According to a third aspect, an embodiment of this application provides a packet sending method. The packet sending method may be executed by a first network device, the first network device may be a next N-hop network device (where N is a positive integer) of a second network device, and at least two transmission paths, a first path and a second path, are included between the second network device and the first network device. The packet sending method specifically includes: The first network device obtains a first correspondence, where the first correspondence may include a correspondence between an identifier of a packet flow and a first periodicity parameter. The first periodicity parameter may reflect a quantity of periodicities between a periodicity in which the second network device sends a data packet in the packet flow and a periodicity in which the first network device forwards the data packet. Then, the first network device may receive a first data packet sent by the second network device in a first periodicity. The first data packet belongs to the packet flow, and the first data packet includes the identifier of the packet flow and an identifier of the first periodicity. After receiving the first data packet, the first network device may determine, based on the identifier of the packet flow, that a time point at which the first data packet is sent may be determined based on the first periodicity parameter, further determine a second periodicity with reference to the first periodicity parameter and the identifier of the first periodicity, and send the first data packet in the second periodicity. In other words, a quantity of periodicities between the first periodicity and the second periodicity matches the first periodicity parameter. In this way, a fluctuation range of a delay value of the packet flow between the second network device and the first network device depends on the first periodicity parameter, and is irrelevant to a transmission path of the packet flow. In this way, the fluctuation range of the delay value of the packet flow between the second network device and the first network device may not be affected by a transmission path of the packet, to control jitter of the packet flow.

In a possible design, the first periodicity parameter may be determined by a first device, and the first network device may report a second periodicity parameter to the first device. Specifically, the first network device may receive a first detection packet including an identifier of a third periodicity. The first detection packet may be sent by a third network device to the first network device in the third periodicity, and the third network device may be a previous-hop network device of the first network device, or may be the foregoing second network device. Then, the first network device may determine the second periodicity parameter based on the identifier of the third periodicity and a time point at which the first detection packet is received. The second periodicity parameter may reflect a quantity of periodicities between a periodicity to which a time point at which the third network device sends a data packet belongs and a periodicity to which an earliest time point at which the first network device can send the data packet belongs. Then, the first network device may send the second periodicity parameter to the first device. In this way, if the third network device is the second network device, the first device may determine the first periodicity parameter based on the second periodicity parameter. If the third network device is the previous-hop network device of the first network device on the first path, the second periodicity parameter may be used as a target hop-by-hop periodicity parameter to determine a periodicity parameter corresponding to the first path.

In a possible design, the first network device may further send an identifier of the first path or an identifier of the third network device to the first device. The first path may be a path between the third network device and the first network device. In this way, the first device may determine, based on an identifier of a path reported by the first network device or an identifier of a network device, that the second periodicity parameter corresponds to the transmission path between the third network device and the first network device.

In a possible design, the first network device may further check the first packet based on the second periodicity. Specifically, it is assumed that the previous-hop network device of the first network device on the first path is a fourth network device. The fourth network device forwards the first packet to the first network device in a fourth periodicity. In this case, the fourth network device may add an identifier of the fourth periodicity to a fourth packet. After receiving the first packet, the first network device may determine a fifth periodicity based on a second correspondence and the identifier of the fourth periodicity, and then determine whether the fifth periodicity matches the second periodicity. The second correspondence indicates a quantity of periodicities between time points at which two adjacent network devices forward a same data packet, in other words, a quantity of periodicities between a periodicity to which a time point at which the fourth network device sends a data packet belongs and a periodicity to which a time point at which the first network device forwards the same data packet belongs. In this way, the fifth periodicity is determined by the first network device based on a time point at which a previous-hop network device forwards the first packet, and the second periodicity is determined by the first network device based on a time point at which the second network device sends the first packet. If the fifth periodicity matches the second periodicity, it indicates that the first packet is forwarded to the first network device using a normal forwarding process, and security of the first packet is high. If the fifth periodicity does not match the second periodicity, it indicates that the first packet may be affected in a transmission process, and security of the first packet is low In this case, the first network device may give an alarm or discard the first packet.

According to a fourth aspect, an embodiment of this application provides a data processing apparatus. The apparatus is used in a first device. The apparatus includes: an obtaining unit, configured to obtain a first periodicity parameter and a second periodicity parameter, where the first periodicity parameter is determined based on duration of transmitting a packet from a first network device to a second network device along a first path, and the second periodicity parameter is determined based on duration of transmitting a packet from the first network device to the second network device along a second path; and a processing unit, configured to determine a third periodicity parameter based on the first periodicity parameter and the second periodicity parameter, where the third periodicity parameter reflects a quantity of periodicities between a periodicity in which the first network device sends a data packet and a periodicity in which the second network device forwards the data packet, the data packet belongs to a packet flow, and the packet flow is transmitted along the first path and the second path.

In a possible design, the processing unit is configured to determine the third periodicity parameter based on a larger periodicity parameter of the first periodicity parameter and the second periodicity parameter.

In a possible design, the processing unit is further configured to: determine a plurality of target hop-by-hop periodicity parameters based on a topology structure of the first path, where the target hop-by-hop periodicity parameter is a quantity of periodicities between periodicities corresponding to time points at which two adjacent network devices on the first path send a packet; and determine the first periodicity parameter based on the plurality of target hop-by-hop periodicity parameters.

In a possible design, the processing unit is further configured to generate a first correspondence based on the third periodicity parameter, where the first correspondence includes a correspondence between an identifier of the packet flow and the third periodicity parameter.

In a possible design, the packet flow includes a first packet, the first device is the first network device, and the apparatus further includes a sending unit. The sending unit is configured to send the first packet in a first periodicity through the first path, where the first packet includes an identifier of the first periodicity and a first sequence identifier, and the first sequence identifier identifies a sequence of the first packet in the packet flow.

In a possible design, the first packet includes an identifier of a second periodicity. The processing unit is further configured to determine the identifier of the second periodicity based on the identifier of the first periodicity and the third periodicity parameter, where the second periodicity is a periodicity to which a time point at which the second network device forwards the first packet belongs.

In a possible design, the processing unit is further configured to generate a first detection packet, where the first detection packet includes an identifier of a third periodicity. The sending unit is further configured to send the first detection packet to a third network device in the third periodicity, where the third network device is a next-hop network device of the first network device on the first path.

In a possible design, the packet flow includes a second packet, the first device is the second network device, and the apparatus further includes a sending unit. The obtaining unit is further configured to obtain the second packet, where the second packet is sent by the first network device to the first device through the first path and/or the second path, the second packet includes an identifier of a fourth periodicity, and the fourth periodicity is a periodicity corresponding to a time point at which the first network device sends the second packet. The processing unit is further configured to determine an identifier of a fifth periodicity based on the identifier of the fourth periodicity and the third periodicity parameter. The sending unit is configured to forward the second packet in the fifth periodicity.

In a possible design, the second packet includes a second sequence identifier, the second sequence identifier identifies a sequence of the second packet in the packet flow. The processing unit is further configured to determine that a packet that corresponds to the second sequence identifier and that is in the packet flow has not been forwarded.

In a possible design, the obtaining unit is configured to receive a second detection packet, where the second detection packet is sent by the first network device to the first device through the first path, the second detection packet includes an identifier of a sixth periodicity, and the sixth periodicity is a periodicity corresponding to a time point at which the first network device sends the second detection packet. The processing unit is configured to determine the first periodicity parameter based on the identifier of the sixth periodicity and a time point at which the second detection packet is received.

In a possible design, the obtaining unit is further configured to receive a third detection packet, where the third detection packet is sent by a fourth network device to the first device in a seventh periodicity, the third detection packet includes an identifier of the seventh periodicity, and the fourth network device is a previous-hop network device of the first device.

In a possible design, the first device is a control plane device, the apparatus further includes a sending unit. The sending unit is configured to send the first correspondence to the first network device and/or the second network device.

According to a fifth aspect, an embodiment of this application provides a packet sending apparatus. The apparatus is used in a first network device. The apparatus includes: a processing unit, configured to obtain a first correspondence, where the first correspondence includes a correspondence between an identifier of a packet flow and a first periodicity parameter, the first periodicity parameter reflects a quantity of periodicities between a periodicity in which the first network device sends a data packet and a periodicity in which a second network device forwards the data packet, and the data packet belongs to the packet flow; and a sending unit, configured to send a first data packet to the second network device separately through a first path and a second path in a first periodicity, where the first data packet includes an identifier of the first periodicity, and the first data packet belongs to the packet flow.

In a possible design, the first data packet further includes an identifier of a second periodicity. The processing unit is configured to determine the identifier of the second periodicity based on the first periodicity parameter and the identifier of the first periodicity, where the second periodicity is a periodicity to which a time point at which the second network device forwards the first packet belongs.

According to a sixth aspect, an embodiment of this application provides a packet sending apparatus. The apparatus is used in a first network device. The apparatus includes: a receiving unit, configured to receive a first data packet, where the first data packet belongs to a packet flow, the first data packet includes an identifier of the packet flow and an identifier of a first periodicity, and the first periodicity is a periodicity corresponding to a time point at which a second network device sends the first data packet; a processing unit, configured to: obtain a first correspondence and determine an identifier of a second periodicity based on the identifier of the first periodicity and a first periodicity parameter, where the first correspondence includes a correspondence between the identifier of the packet flow and the first periodicity parameter, the first periodicity parameter reflects a quantity of periodicities between a periodicity in which the second network device sends a data packet and a periodicity in which the first network device forwards the data packet, and the data packet belongs to the packet flow; and a sending unit, configured to forward the first data packet in the second periodicity.

In a possible design, the receiving unit is configured to receive a first detection packet, where the first detection packet includes an identifier of a third periodicity, and the first detection packet is sent by a third network device in the third periodicity. The processing unit is configured to determine a second periodicity parameter based on a time point at which the first detection packet is received, where the second periodicity parameter reflects a quantity of periodicities between a periodicity in which the third network device sends a packet and an earliest periodicity in which the first network device sends the packet. The sending unit is configured to send the second periodicity parameter to a first device.

In a possible design, the sending unit is configured to send an identifier of a first path or an identifier of the third network device to the first device, where the first path is a path between the third network device and the first network device.

In a possible design, the first packet further includes an identifier of a fourth periodicity, the fourth periodicity is a periodicity to which a time point at which a fourth network device sends the first packet belongs, and the fourth network device is a previous-hop network device of the first network device on the first path. The processing unit is further configured to: determine a fifth periodicity based on a second correspondence and the identifier of the fourth periodicity, and determine that the fifth periodicity matches the second periodicity, where the second correspondence is a quantity of periodicities between a periodicity in which the fourth network device sends a data packet and a periodicity in which the first network device forwards the data packet.

According to a seventh aspect, an embodiment of this application provides a first device. The first device includes a processor and a memory, the memory is configured to store instructions or program code, and the processor is configured to invoke the instructions or the program code from the memory and run the instructions or the program code, to perform the data processing method described in the first aspect.

According to an eighth aspect, an embodiment of this application provides a network device. The network device includes a processor and a memory, the memory is configured to store instructions or program code, and the processor is configured to invoke the instructions or the program code from the memory and run the instructions or the program code, to perform the packet sending method described in the second aspect or the third aspect.

According to a ninth aspect, an embodiment of this application provides a chip, including a memory and a processor. The memory is configured to store instructions or program code, and the processor is configured to invoke the instructions or the program code from the memory and run the instructions or the program code, to perform the data processing method described in the first aspect, or perform the packet sending method described in the second aspect or the third aspect.

According to a tenth aspect, an embodiment of this application provides a computer-readable storage medium, including instructions, a program, or code. When the instructions, the program, or the code is executed on a computer, the computer is enabled to perform the data processing method described in the first aspect, or perform the packet sending method described in the second aspect or the third aspect.

### BRIEF DESCRIPTION OF DRAWINGS

FIG. 1 is a diagram of a network structure of a network system according to an embodiment of this application;
FIG. 2 is a diagram of signaling interaction of a data processing method and a packet sending method according to an embodiment of this application;
FIG. 3 is a diagram of signaling interaction of a method for determining a first periodicity parameter according to an embodiment of this application;
FIG. 4 is a schematic diagram of a structure of a data processing apparatus 400 according to an embodiment of this application;
FIG. 5 is a schematic diagram of a structure of a packet sending apparatus 500 according to an embodiment of this application;
FIG. 6 is another schematic diagram of a structure of a packet sending apparatus 600 according to an embodiment of this application;
FIG. 7 is a schematic diagram of a structure of a device 700 according to an embodiment of this application; and
FIG. 8 is a schematic diagram of a structure of a device 800 according to an embodiment of this application.

### DESCRIPTION OF EMBODIMENTS

With reference to the accompanying drawings, the following describes a conventional technology, and a data processing method and a packet sending method that are provided in embodiments of this application.

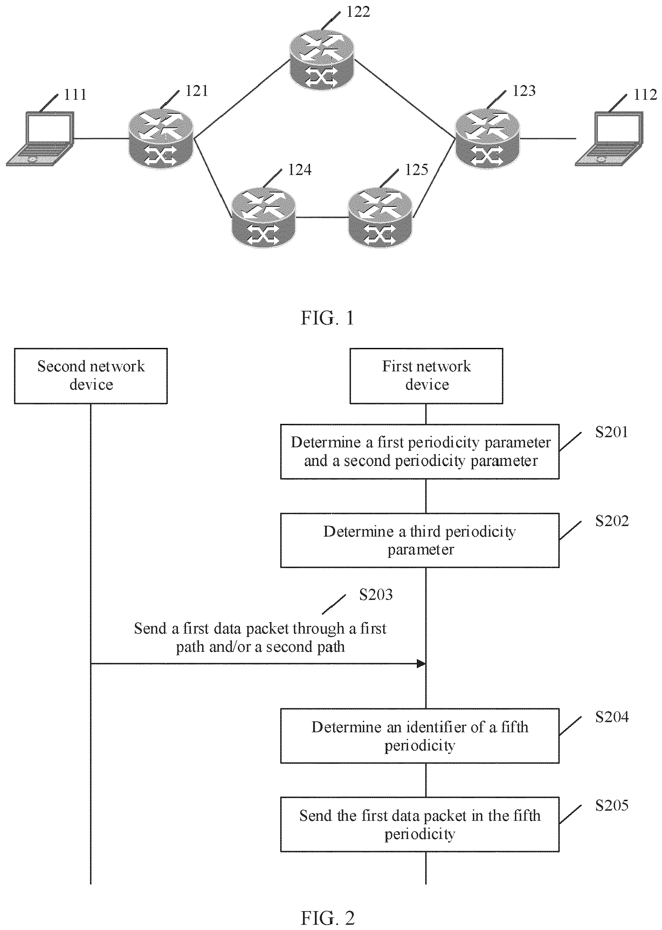

FIG. 1 is a diagram of a network structure of a network system according to an embodiment of this application. In FIG. 1, the network system includes a device 111, a device 112, a network device 121, a network device 122, a network device 123, a network device 124, and a network device 125. The network device 121 is separately connected to the device 111, the network device 122, and the network device 124, the network device 123 is separately connected to the device 112, the network device 122, and the network device 125, and the network device 124 is connected to the network device 125.

It is assumed that there is a packet flow A in the network system, and a packet in the packet flow A is transmitted to the device 112 through a transmission path "the network device 121 → the network device 122 → the network device 123". Then, to control jitter of the packet flow A, a time interval between time points at which one or more network devices send the packet on the transmission path of the packet flow A may be controlled. For example, a time point at which the packet is sent may be carried in the packet, and a periodicity parameter is configured on one or more of the network device 121, the network device 122, and the network device 123. The periodicity parameter reflects a time interval between a time point at which a network device sends the packet and the time point carried in the packet, for example, may be a quantity of periodicities between a periodicity in which the network device sends the packet and a periodicity carried in the packet. The periodicity represents a period of time with fixed duration. In a process of forwarding a packet by the network system, time may be divided into one or more periodicities, and one or more packets may be sent in each periodicity.

For example, it is assumed that a periodicity parameter 2 is configured on the network device 122 and the network device 123, and the device 111 sends the packet flow to the device 112 through the transmission path "the network device 121 → the network device 122 → the network device 123".

It is assumed that the network device 121 sends a packet x to the network device 122 in an i^{th} (where i is a positive integer) periodicity, and the packet x includes an identifier of the i^{th} periodicity. After receiving the packet x, the network device 122 may determine, based on the identifier of the i^{th} periodicity and the periodicity parameter 2, that a periodicity in which the packet x is forwarded is an (i+2)^{th} periodicity. Then, the network device 122 may forward the packet x to the network device 123 in the (i+2)^{th} periodicity, and replace the identifier of the periodicity that is in the packet x with an identifier of the (i+2)^{th} periodicity. Similarly, the network device 123 may send the packet x to the device 112 in an (i+4)^{th} periodicity based on the identifier of the (i+2)^{th} periodicity that is carried in the packet x and the periodicity parameter 2.

In other words, for a packet sent by the network device 121 in the i^{th} periodicity, the network device 123 may send the packet to the device 112 in the (i+4)^{th} periodicity. If a delay value between the network device 123 and the device 112 is ignored, and it is assumed that duration of each periodicity is T, each packet in the packet flow A may fluctuate between 3T and 5T, and the jitter of the packet flow A does not exceed 2T. For example, it is assumed that a packet y is a packet with a highest delay value in the packet flow A, the packet y may be sent by the network device 121 at a start stage of a j^{th} periodicity, and may be sent by the network device 123 at an end stage of a (j+4)^{th} (where j is a positive integer) periodicity. A delay value of the packet y is close to duration of five periodicities. It is assumed that a packet z is a packet with a smallest delay value in the packet flow A, the packet z may be sent by the network device 121 at an end stage of a k^{th} periodicity, and may be sent by the network device 123 at a start stage of a k46^{th} (where k is a positive integer) periodicity. A delay value of the packet z is close to duration of three periodicities.

In this way, the time interval between the time points at which the network devices transmitting the packet flow forwards the packet is limited, so that the jitter of the packet flow can be controlled within a preset range, and a requirement of a service for the jitter can be met. Optionally, in some possible implementations, the foregoing technology may be referred to as a deterministic internet protocol (Deterministic Internet Protocol, DIP) technology, and a packet transmitted using the DIP technology may be referred to as a DIP packet.

In the foregoing technical solutions, the jitter and the delay value of the packet flow may be controlled based on the time interval between the time points at which the network devices transmitting the packet flow sends the packet. Therefore, if a fault occurs on a network device on a transmission path of the packet flow, the packet flow cannot be transmitted through the original transmission path. To ensure normal transmission of the packet flow, the packet flow. may be forwarded through another path. However, a quantity of network devices on a changed transmission path may be different from a quantity of network devices on the original transmission path, and a configuration of each network device on the changed transmission path may also be different from a periodicity parameter of each network device on the original transmission path. Therefore, a change of the transmission path may cause a change of the jitter of the packet flow, and the jitter of the packet flow cannot be controlled within the preset range.

FIG. 1 is still used as an example for description. It is assumed that a fault occurs on the network device 122, and consequently the transmission path "the network device 121 → the network device 122 → the network device 123" is unavailable. In this case, the packet in the packet flow A may be transmitted through a transmission path "the network device 121 → the network device 124 → the network device 125 → the network device 123". If no periodicity parameter is configured on the network device 124 and the network device 125, the delay value and the jitter of the packet flow A cannot be controlled.

Even in application scenarios such as the DIP technology scenario in which a periodicity parameter is configured on the network device 124 and the network device 125, because network devices included in the transmission path "the network device 121 → the network device 122 → the network device 123" are different from network devices included in the transmission path "the network device 121 → the network device 124 → the network device 125 → the network device 123", a fluctuation range of a delay value corresponding to the transmission path "the network device 121 → the network device 122 → the network device 123" may also be different from a fluctuation range of a delay value corresponding to the transmission path "the network device 121 → the network device 124 → the network device 125 → the network device 123".

For example, it is assumed that the periodicity parameter 2 is configured on both the network device 124 and the network device 125, the network device 121 sends a packet w in the packet flow A to the network device 124 in a g^{th} (where g is a positive integer) periodicity, and the packet w includes an identifier of the g^{th} periodicity. It can be learned from the foregoing descriptions that the network device 124 may send the packet w to the network device 125 in a (g+2)^{th} periodicity based on the identifier of the g^{th} periodicity that is carried in the packet w and the periodicity parameter 2, and replace the identifier of the periodicity that is in the packet w with an identifier of the (g+2)^{th} periodicity. The network device 125 may send the packet w to the network device 123 in a (g+4)^{th} periodicity based on the identifier of the (g+2)^{th} periodicity that is carried in the packet w and the periodicity parameter 2, and replace the identifier of the periodicity that is in the packet w with an identifier of the (g+4)^{th} periodicity. The network device 123 may send the packet w to the device 112 in a (g+6)^{th} periodicity based on the identifier of the (g+4)^{th} periodicity that is carried in the packet w and the periodicity parameter 2. It can be learned that if the packet flow A is transmitted through the transmission path "the network device 121 → the network device 124 → the network device 125 → the network device 123", the delay value of the packet in the packet flow A may fluctuate using 6T as a reference. It can be learned from the foregoing descriptions that the delay value of the packet transmitted through the transmission path "the network device 121 → the network device 124 → the network device 125 → the network device 123" may fluctuate between 5T and 7T.

However, if a process in which a transmission path of the packet flow A is switched from the transmission path "the network device 121 → the network device 122 → the network device 123" to the transmission path "the network device 121 → the network device 124 → the network device 125 → the network device 123" is considered, a delay value of a packet with a smallest delay value in the packet flow A is 3T, a delay value of a packet with a largest delay value is 7T, the delay value of the packet fluctuates between 3T and 7T, and the jitter of the packet flow A approaches 4T. It can be learned that because network devices on different transmission paths are different, switching of a transmission path of a packet flow may cause a change of a fluctuation range of a delay value of a packet, intensifying jitter of the packet flow.

It can be learned that, for a conventional method for controlling jitter of a packet flow, the jitter of the packet flow. is related to a transmission path. Therefore, in an application scenario in which a path may be switched or a same packet flow may be sent through a plurality of paths, the conventional method for controlling jitter of a packet flow cannot control the jitter of the packet flow within a preset range.

To resolve the foregoing problem that the jitter of the packet flow cannot be controlled within the preset range, embodiments of this application provide a data processing method and a packet sending method, to unify delay jitter ranges of different transmission paths and thus better control the jitter of the packet flow.

The data processing method and the packet sending method provided in embodiments of this application may be applied to the system shown in FIG. 1. Specifically, the packet sending method and the data processing method may be performed by any one or more of the network device 121, the network device 122, the network device 123, the network device 124, and the network device 125 in the embodiment shown in FIG. 1.

In embodiments of this application, the device 111 and the device 112 may be a terminal device, or may be a device such as a server or a database. The terminal device may also be referred to as user equipment (user equipment, UE), a mobile station (mobile station, MS), a mobile terminal (mobile terminal, MT), a terminal, or the like, and is a device that provides voice and/or data connectivity for a user, or a chip disposed in the device, for example, a handheld device or a vehicle-mounted device having a wireless connection function. Currently, some examples of the terminal device are a mobile phone, a desktop computer, a tablet computer, a notebook computer, a palmtop computer, a mobile internet device (mobile internet device, MID), a wearable device, a virtual reality (virtual reality, VR) device, an augmented reality (augmented reality, AR) device, a wireless terminal or a wired terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a 5G-residential gateway (5G-residential gateway, 5G-RG) device, and the like.

The network device may be a device having a forwarding function, for example, a forwarding device such as a router (router) or a switch (switch), or may be a device such as a server or a terminal device that has a forwarding function. Optionally, the network device may be a provider edge (Provider Edge, PE) device deployed at a network edge, for example, may be the network device 121 or the network device 123 in FIG. 1; or may be a provider (Provider, P) device deployed inside a network, for example, may be the network device 122, the network device 124, or the network device 125 in FIG. 1.

It may be understood that the packet sending method may be performed by a forwarding plane of the network device, for example, may be performed by a forwarding chip of the network device. The data processing method may be performed by a control plane of the network device, for example, may be performed by a processor of the network device. The processor may be a central processing unit (Central Processing Unit, CPU) of the network device. Optionally, in some other possible implementations, the data processing method may alternatively be performed by an independent control plane device. For example, in application scenarios such as a virtualized network function (Virtualized Network Function, VNF) scenario, the data processing method may also be performed by a server, and the server may be used as the control plane device to perform the method performed by the control plane of the network device. In embodiments of this application, if the data processing method is performed by the independent control plane device, the control plane device may be referred to as a first device or a control device.

The following describes the technical solutions provided in embodiments of this application with reference to FIG. 2 using an example in which the technical solutions provided in embodiments of this application are executed by a network device. FIG. 2 is a diagram of signaling interaction of a data processing method and a packet sending method according to an embodiment of this application. The method includes the following steps.

S201. A first network device determines a first periodicity parameter and a second periodicity parameter.

The first network device and a second network device described below may be any one of the network device 121, the network device 122, the network device 123, the network device 124, or the network device 125 in FIG. 1. In this embodiment of this application, there may be at least two transmission paths between the second network device and the first network device, and the at least two transmission paths include a first path and a second path. Optionally, there may be a master/slave relationship between the first path and the second path. For example, in some possible implementations, the first path may be a master (Master) path, and the second path may be a slave (Slave) path.

The first periodicity parameter reflects a time interval between a time point at which a packet transmitted along the first path is sent by the second network device and an earliest time point at which the packet can be forwarded by the first network device. The second periodicity parameter reflects a time interval between a time point at which a packet transmitted along the second path is sent by the second network device and an earliest time point at which the packet can be forwarded by the first network device. Optionally, the first periodicity parameter and the second periodicity parameter may be represented by a quantity of periodicities. In other words, for a packet transmitted through the first path, a quantity of periodicities between a time point at which the packet is sent by the second network device and a time point at which the packet is forwarded by the first network device may be equal to the first periodicity parameter; and for a packet transmitted through the second path, a quantity of periodicities between a time point at which the packet is sent by the second network device and a time point at which the packet is forwarded by the first network device may be equal to the second periodicity parameter. The periodicity represents a period of time with fixed duration. In a process of forwarding a packet by a network system, time may be divided into one or more periodicities, and one or more packets may be sent in each periodicity.

In this embodiment of this application, the first periodicity parameter and the second periodicity parameter may be determined by the first network device based on a time point at which a detection packet is received. The detection packet may be sent by the second network device to the first network device. The detection packet may include a periodicity in which the second network device sends the detection packet.

Specifically, the second network device may generate a first detection packet. The first detection packet may include an identifier of a first periodicity, where the first periodicity is a periodicity corresponding to a time point at which the second network device sends the first detection packet. In other words, the second network device may send the first detection packet to the first network device through the first path in the first periodicity. Similarly, the second network device may also generate a second detection packet. The second detection packet may include an identifier of a second periodicity, where the second periodicity is a periodicity corresponding to a time point at which the second network device sends the second detection packet. In other words, the second network device may send the second detection packet to the first network device through the second path in the second periodicity. Optionally, the first periodicity and the second periodicity may be the same. In other words, the second network device may send two detection packets to the first network device respectively through the first path and the second path in a same periodicity.

After receiving the first detection packet, the first network device may determine the first periodicity parameter based on a time point at which the first detection packet is received and the identifier of the first periodicity. After receiving the second detection packet, the first network device may determine the second periodicity parameter based on a time point at which the second detection packet is received and the identifier of the second periodicity.

The following uses the first periodicity parameter as an example to describe a possible implementation in which the first network device determines a periodicity parameter.

Optionally, the first network device may determine a first time point based on the time point at which the first detection packet is received, and determine a quantity of periodicities between a periodicity corresponding to the first time point and the first periodicity as the first periodicity parameter. The first time point is an earliest time point at which the first detection packet arrives at an outbound interface of the first network device, that is, an earliest time point at which the first network device can send the first detection packet.

For example, the first network device may obtain related parameters such as maximum duration for processing a packet, and determine the first time point based on these parameters and the time point at which the first detection packet is received. Then, the first network device may determine a periodicity to which the first time point belongs as a target periodicity, and calculate a quantity of periodicities between the first periodicity and the target periodicity, to obtain the first periodicity parameter. Alternatively, the first network device may determine a next periodicity of a periodicity to which the first time point belongs as a target periodicity, and calculate a quantity of periodicities between the first periodicity and the target periodicity, to obtain the first periodicity parameter.

In the foregoing descriptions, the first network device may determine the first periodicity parameter based on the detection packet sent by the second network device, and determine the second periodicity parameter based on the second detection packet. In this embodiment of this application, the first detection packet may include an identifier of a packet flow or may include an identifier of the first path. The following separately describes the two implementations.

In a first possible implementation, the first detection packet includes an identifier of a first packet flow. Similarly, the second detection packet may also include the identifier of the first packet flow. The first packet flow is a packet flow including data packets, and the first packet flow may be transmitted through the first path and/or the second path. Optionally, the second network device may first determine the first path and the second path that correspond to the first packet flow, then generate the first detection packet and the second detection packet that include the identifier of the first packet flow, and send the first detection packet and the second detection packet to the first network device respectively through the first path and the second path.

For example, the second network device may first obtain a first correspondence. The first correspondence indicates that a packet in the first packet flow may be sent through the first path and the second path. Optionally, the first correspondence may be a master/slave relationship between the first path and the second path. To be specific, the first correspondence may indicate that for a packet in the first packet flow, the first path is a master path, and the second path is a slave path. Based on the first correspondence, the second network device may generate two detection packets including the identifier of the first packet flow. Then, the second network device may determine a first network interface corresponding to the first path and a second network interface corresponding to the second path, and send, respectively through the first network interface and the second network interface, the detection packets including the identifier of the first packet flow. In this way, the detection packet sent through the first network interface may be referred to as the first detection packet, and the detection packet sent through the second network interface may be referred to as the second detection packet.

In a second possible implementation, the first detection packet includes the identifier of the first path, and the second detection packet may include an identifier of the second path. Further, the second network device may send a plurality of detection packets to a plurality of network devices. Specifically, the second network device may first determine transmission paths whose head node is the second network device, and generate a plurality of detection packets corresponding to each transmission path. Then, the second network device may send the plurality of detection packets through the plurality of transmission paths, and each detection packet may include an identifier of a transmission path that carries the detection packet.

For example, it is assumed that there are three transmission paths whose head node is the second network device in the network system. Two transmission paths, of the three transmission paths, whose tail nodes are the first network device are the first path and the second path, and the another transmission path is a third path. In this case, the second network device may generate three detection packets, which respectively include the identifier of the first path, the identifier of the second path, and an identifier of the third path. Then, the second network device may send, through a network interface corresponding to the first path, a detection packet (the foregoing first detection packet) including the identifier of the first path; send, through a network interface corresponding to the second path, a detection packet (the foregoing second detection packet) including the identifier of the second path; and send, through a network interface corresponding to the third path, a detection packet including the identifier of the third path.

S202. The first network device determines a third periodicity parameter based on the first periodicity parameter and the second periodicity parameter.

After determining the first periodicity parameter and the second periodicity parameter, the first network device may determine the third periodicity parameter based on the first periodicity parameter and the second periodicity parameter. The third periodicity parameter reflects a quantity of periodicities between a time point at which a packet in the first packet flow. is sent by the second network device and a time point at which the packet is forwarded by the first network device.

In technologies such as the DIP for controlling jitter of a packet, a time point at which a packet is sent may be delayed, so that packets sent by a previous-hop network device in a same periodicity may be sent by a next-hop network device in a same periodicity. In other words, delay values of a plurality of packets in the packet flow may be controlled within a preset range by increasing a delay value of a packet whose transmission speed is higher in a packet flow, to meet a requirement for jitter of the packet flow. Based on a same idea, in this embodiment of this application, the first network device may determine the third periodicity parameter based on a larger periodicity parameter of the first periodicity parameter and the second periodicity parameter. For example, the first network device may compare the first periodicity parameter with the second periodicity parameter, and determine a larger periodicity parameter of the first periodicity parameter and the second periodicity parameter as the third periodicity parameter. Optionally, after determining the larger periodicity parameter of the first periodicity parameter and the second periodicity parameter, the first network device may modify the larger periodicity parameter, and then determine a modified result as the third periodicity parameter. For example, considering overheads of dual fed and selective receiving, the first network device may sum up the larger periodicity parameter of the first periodicity parameter and the second periodicity parameter with a preset quantity of periodicities, and determine a result obtained through summation as the third periodicity parameter.

FIG. 1 is still used as an example for description. It is assumed that the first network device is the network device 123; the second network device is the network device 121; the first path is the transmission path "the network device 121 → the network device 122 → the network device 123"; the second path is the transmission path "the network device 121 → the network device 124 → the network device 125 → the network device 123"; and the periodicity parameter 2 is deployed on each network device in the network system.

The network device 121 may generate the first detection packet, and send the first detection packet to the network device 123 in an i^{th} periodicity through the transmission path "the network device 121 → the network device 122 → the network device 123"; or may generate the second detection packet, and send the second detection packet to the network device 123 in a j^{th} periodicity through the transmission path "the network device 121 → the network device 124 → the network device 125 → the network device 123".

Because the periodicity parameter 2 is deployed on the network device 122, the network device 123, the network device 124, and the network device 125, the network device 123 may determine that an earliest time point at which the first detection packet can be sent is within an (i+4)^{th} periodicity, and an earliest time point at which the second detection packet can be sent is within a (j+6)^{th} periodicity. In this case, the network device 123 may determine that the first periodicity parameter is 4 and the second periodicity parameter is 6, and further determine that the third periodicity parameter is 6.

After determining the third periodicity parameter, the first network device may generate the first correspondence based on the third periodicity parameter and the identifier of the first packet flow. The first correspondence may be a correspondence between the third periodicity parameter and the first packet flow, and reflects that a quantity of periodicities between a periodicity to which a time point at which a packet in the first packet flow is sent by the second network device belongs and a periodicity to which a time point at which the packet is forwarded by the first network device belongs matches the third periodicity parameter.

It can be learned from the foregoing descriptions that the first periodicity parameter may be obtained by the first network device based on the first detection packet, the second periodicity parameter may be obtained by the first network device based on the second detection packet, the first detection packet may include the identifier of the first packet flow or may include the identifier of the first path, and the second detection packet may include the identifier of the first packet flow or may include the identifier of the second path. According to different information included in the first detection packet and the second detection packet, the first network device may generate the first correspondence based on different methods. Descriptions are separately provided in the following.

In a first possible implementation, the first detection packet and the second detection packet include the identifier of the first packet flow. In this case, the first network device may determine, based on the first detection packet and/or the second detection packet, that the first periodicity parameter and the second periodicity parameter correspond to the first packet flow, to obtain the identifier of the first packet flow based on the first detection packet and/or the second detection packet, and generate the first correspondence.

In a second possible implementation, the first detection packet includes the identifier of the first path, and the second detection packet includes the identifier of the second path. In this case, the first network device may first determine packet flows corresponding to the first path and the second path, and then generate the first correspondence.

Specifically, the first network device may obtain the second correspondence. The second correspondence is a correspondence between a transmission path and a packet flow, and reflects a transmission path or transmission paths through which the packet flow is transmitted. The second correspondence may include a correspondence among the identifier of the first path, the identifier of the second path, and the identifier of the first packet flow. Based on the second correspondence, the network device may determine that a packet in the first packet flow may be transmitted through two paths: the first path and the second path. In this case, after receiving the first detection packet and the second detection packet, the first network device may determine the first periodicity parameter corresponding to the identifier of the first path and the second periodicity parameter corresponding to the identifier of the second path. Then, based on the second correspondence, the first network device may determine that the third periodicity parameter determined based on the first periodicity parameter and the second periodicity parameter corresponds to the first packet flow, and further generate the first correspondence.

It should be noted that a method for generating the first correspondence may be performed by the first network device, or may be performed by an independent control device (for example, a server or a controller). After determining the first correspondence, the control device may deliver the first correspondence to the first network device and/or the second network device.

Specifically, the first network device may receive the first detection packet including the identifier of the first path and the second detection packet including the identifier of the second path, and determine the first periodicity parameter and the second periodicity parameter. Then, the first network device may send a correspondence between the first periodicity parameter and the identifier of the first path and a correspondence between the second periodicity parameter and the identifier of the second path to the control device. After receiving information sent by the first network device, the control device may determine the correspondence among the first path, the second path, and the first packet flow based on a correspondence between a packet flow and a path, to calculate the third periodicity parameter based on the first periodicity parameter and the second periodicity parameter, and generate the correspondence between the third periodicity parameter and the identifier of the first packet flow.

In some possible implementations, the network system is implemented based on the segment routing over internet protocol version 6 (Internet Protocol Version 6) (Segment Routing IPv6, SRv6), and the control device may determine a correspondence among the first path, the second path, and the first packet flow through SRv6 explicit path planning, to generate the first correspondence.

S203. The second network device sends a first data packet to the first network device through the first path and/or the second path.

In a process of sending a data packet, the second network device may send the first data packet to the first network device separately through the first path and/or the second path. The first data packet is a data packet in the first packet flow. The first data packet may include an identifier of a third periodicity, where the third periodicity is a time period to which a time point at which the second network device sends the first data packet belongs. In other words, the second network device may send two first data packets to the first network device respectively through the first path and the second path in the third periodicity. Alternatively, the second network device may send one first data packet to the first network device through the first path or the second path in the third periodicity.

In some possible implementations, the first data packet may include a sequence identifier, where the sequence identifier may identify a sequence of the first data packet in the first packet flow. For example, the sequence identifier indicates that the first packet is a specific packet in the first packet flow. In this embodiment of this application, the sequence identifier may be used by the first network device to forward a data packet. For this part of content, refer to descriptions of S205. Details are not described herein.

In some possible implementations, a same time period may be identified as different periodicities using different identifiers, and different periodicities may represent a same time period. In this case, the first data packet may include the identifier of the third periodicity and an identifier of a fourth periodicity. Time periods represented by the third periodicity and the fourth periodicity may be the same, but the identifier of the third periodicity and the identifier of the fourth periodicity may be used for different purposes.

Specifically, the identifier of the third periodicity may be used by the first network device to determine a time point at which the first data packet is sent, and the identifier of the fourth periodicity may be used by a third network device to determine a time point at which the first data packet is sent. The third network device may be any network device on the first path or the second path. An example is used for description. The first data packet may include a field M and a field N, which are respectively for carrying a periodicity identifier A and a periodicity identifier B. The field M may be for carrying the identifier of the third periodicity, and the field N may be for carrying the identifier of the fourth periodicity. In a process of transmitting the first data packet on the first path, a value of the field M may remain unchanged, and a value of the field N may be adjusted with forwarding of the first data packet. Specifically, a network device that forwards the first data packet may adjust the value of the field N to a periodicity to which a time point at which the network device forwards the first data packet belongs.

The foregoing describes the first data packet, and the following describes a method for generating and sending the first data packet by the second network device.

After obtaining the first data packet, the second network device may determine whether the first data packet includes the identifier of the first packet flow. Because the first data packet belongs to the first packet flow, and the first data packet may include the identifier of the first packet flow, the second network device may forward the first data packet using a forwarding method corresponding to the first packet flow. Then, the second network device may determine an earliest time point at which the first data packet can be sent, and determine a periodicity to which the earliest time point belongs as the third periodicity. The second network device may add the identifier of the third periodicity to the first data packet, replicate the first data packet, and then send the first data packet separately through the network interface corresponding to the first path and the network interface corresponding to the second path.

Optionally, the first data packet may further include an identifier of a transmission path for transmitting the first data packet. In other words, the first data packet transmitted through the first path may include the identifier of the first path, and the first data packet transmitted through the second path may include the identifier of the second path.

In the foregoing descriptions, the second network device may send the first data packet to the first network device through the first path and the second path. In other words, for each data packet in the first packet flow, the second network device may replicate the data packet into two data packets, and send the two data packets respectively through the first path and the second path. In some possible implementations, to save network resources, the first network device may alternatively send a data packet to the first network device through the first path or the second path, and switch to the other path when a fault occurs on one of the paths.

FIG. 1 is still used as an example for description. It is assumed that the first network device is the network device 123; the second network device is the network device 121; the first path is the transmission path "the network device 121 → the network device 122 → the network device 123"; the second path is the transmission path "the network device 121 → the network device 124 → the network device 125 → the network device 123"; the transmission path "the network device 121 → the network device 122 → the network device 123" is a master path; and the transmission path "the network device 121 → the network device 124 → the network device 125 → the network device 123" is a slave path.

In this case, when no fault occurs on the transmission path "the network device 121 → the network device 122 → the network device 123", the network device 121 may send a data packet in the first packet flow through the transmission path "the network device 121 → the network device 122 → the network device 123" used as the master path. For example, the network device 121 may send a data packet through a network interface that is on the network device 121 and that is connected to the network device 122. After it is determined that a fault occurs on the transmission path "the network device 121 → the network device 122 → the network device 123", the network device may send a data packet through the transmission path "the network device 121 → the network device 124 → the network device 125 → the network device 123" used as the slave path. For example, the network device may send a data packet through a network interface that is on the network device 121 and that is connected to the network device 124.

It can be learned from the foregoing descriptions that the first correspondence may be generated by the control device and sent to the first network device and/or the second network device. If the control device sends the first correspondence to the second network device, the second network device may determine a fifth periodicity based on the third periodicity and the third periodicity parameter, and add an identifier of the fifth periodicity to the first data packet. The fifth periodicity is a periodicity to which a time point at which the first network device forwards the first data packet belongs. In this way, after receiving the first data packet, the first network device may determine, based on the identifier of the fifth periodicity that is included in the first data packet, the time point at which the first data packet is forwarded. For descriptions of determining the fifth periodicity, refer to the following descriptions. Details are not described herein.

204. The first network device determines the identifier of the fifth periodicity based on the third periodicity parameter and the identifier of the third periodicity.

After receiving the first data packet, the first network device may determine the identifier of the fifth periodicity based on the third periodicity parameter and the identifier of the third periodicity. The fifth periodicity is the periodicity to which the time point at which the first network device forwards the first data packet belongs. It can be learned from the foregoing descriptions that a value of the identifier of the third periodicity may be a sequence number of the third periodicity, and the third periodicity parameter may be a quantity of periodicities. In this case, the first network device may sum up the sequence number of the third periodicity and the third periodicity parameter, and use an obtained result as a sequence number of the fifth periodicity to obtain the identifier of the fifth periodicity. For example, it is assumed that the third periodicity is a k^{th} periodicity, and the value of the identifier of the third periodicity may be k. If the third periodicity parameter is m, the first network device may determine that a value of the identifier of the fifth periodicity is k+m, indicating that the first packet can be forwarded in a (k+m)^{th} periodicity.

S205. The first network device forwards the first data packet in the fifth periodicity.

After determining the identifier of the fifth periodicity, the first network device may forward the first data packet in the fifth periodicity. Optionally, before forwarding the first data packet, the first network device may delete the identifier of the third periodicity that is carried in the first data packet, or update the identifier of the third periodicity that is carried in the first data packet to the identifier of the fifth periodicity.

It can be learned from the foregoing descriptions that the second network device may send two first data packets to the first network device respectively through the first path and the second path. To avoid repeatedly forwarding the first data packet, the first network device may forward the first data packet based on a sequence number in the first data packet.

Specifically, after receiving the first data packet, the first network device may obtain a sequence identifier carried in the first data packet, and determine whether a data packet that corresponds to the sequence identifier and that is in the first packet flow has been forwarded. If the data packet that corresponds to the sequence identifier and that is in the first packet flow has not been forwarded, the first network device may forward the first data packet in the fifth periodicity, and mark the data packet that corresponds to the sequence identifier and that is in the packet flow as being in a forwarded state. If the first network device determines that the data packet that corresponds to the sequence identifier and that is in the first packet flow has been forwarded, it indicates that the first data packet has been forwarded. To avoid repeated packet sending, the first network device may refuse to forward the first data packet, for example, discard the first data packet.

FIG. 1 is still used as an example for description. It is assumed that the first network device is the network device 123; the second network device is the network device 121; the first path is the transmission path "the network device 121 → the network device 122 → the network device 123"; the second path is the transmission path "the network device 121 → the network device 124 → the network device 125 → the network device 123", and the network device 121 sends a data packet X to the network device 123 separately through the transmission path "the network device 121 → the network device 122 → the network device 123" and the transmission path "the network device 121 → the network device 124 → the network device 125 → the network device 123". The data packet X includes a sequence identifier Y.

If the network device 123 first receives the data packet X transmitted through the transmission path "the network device 121 → the network device 122 → the network device 123", the network device 123 may determine whether the sequence identifier Y included in the data packet X is marked as "forwarded". Because the network device 123 has not forwarded the first data packet, a state of the sequence identifier Y is "not forwarded". In this case, the network device 123 may forward the data packet X in the fifth periodicity, and then mark the state of the sequence identifier Y as "forwarded". If the network device 123 further receives the data packet X transmitted through the transmission path "the network device 121 → the network device 124 → the network device 125 → the network device 123", the network device 123 may discard the data packet X because the state of the sequence identifier Y is "forwarded".

Optionally, if the first network device receives two first data packets that are respectively transmitted through the first path and the second path, the first network device may select one of the received two first data packets for forwarding. Optionally, the first network device may select a to-be-forwarded first data packet based on the master/slave relationship between the first path and the second path, or may select a to-be-forwarded first data packet based on link quality of the first path and the second path. An operation of forwarding the first data packet by the first network device is not limited in this embodiment of this application.

In this embodiment of this application, the third periodicity parameter may be determined based on the first periodicity parameter corresponding to the first path and the second periodicity parameter corresponding to the second path. When sending the first data packet, the second network device may include the identifier of the third periodicity in the first data packet, to indicate a periodicity to which a time point at which the first data packet is sent belongs. After receiving the first data packet, the first network device may determine the identifier of the fifth periodicity based on the third periodicity parameter and the identifier of the third periodicity, to forward the first data packet in the fifth periodicity. In this way, a periodicity to which a time point at which the first data packet is sent by the first network device belongs depends on the identifier of the third periodicity and the third periodicity parameter. In other words, a time point at which the first network device sends a data packet is related to a time point at which the data packet is sent by the second network device and the third periodicity parameter, and is irrelevant to a path through which the data packet passes between the second network device and the first network device. When the third periodicity parameter does not change, regardless of whether a data packet arrives at the first network device through the first path or arrives at the first network device through the second path, for a data packet sent by the second network device in a periodicity, the first network device may send the data packet in a determined periodicity. A fluctuation range of a delay value of a packet flow between the second network device and the first network device depends on the third periodicity parameter, and is irrelevant to a transmission path of the packet flow. In addition, because the third periodicity parameter is determined based on the first periodicity parameter and the second periodicity parameter, a quantity of periodicities that corresponds to the third periodicity parameter is greater than a quantity of periodicities between a periodicity to which a time point at which the second network device receives the data packet belongs and the periodicity to which the time point at which the first network device sends the data packet belongs, so that the data packet can be normally forwarded. In this way, even if there are a plurality of transmission paths between the second network device and the first network device, the unified third periodicity parameter is used, and an identifier of a periodicity is carried in a data packet sent by the second network device, so that the fluctuation range of the delay value of the packet flow between the second network device and the first network device may not be affected by a transmission path of the packet. This achieves controlling over jitter of the packet flow.

FIG. 1 is still used as an example for description. It is assumed that the first network device is the network device 123; the second network device is the network device 121; the first path is the transmission path "the network device 121 → the network device 122 → the network device 123"; the second path is the transmission path "the network device 121 → the network device 124 → the network device 125 → the network device 123"; and a periodicity parameter deployed on each network device in the network system is 2. It can be learned from the foregoing descriptions that a value of the third periodicity parameter may be 4, a value of the second periodicity parameter may be 6, and the network device 123 may determine that the value of the third periodicity parameter is 6.

It is assumed that the network device 121 sends a data packet X to the network device 123 in an i^{th} periodicity separately through the transmission path "the network device 121 → the network device 122 → the network device 123" and the transmission path "the network device 121 → the network device 124 → the network device 125 → the network device 123". In this case, the network device 123 may receive, in an (i+2)^{th} periodicity, the data packet X transmitted through the path "the network device 121 → the network device 122 → the network device 123"; and receive, in an (i+4)^{th} periodicity, the data packet X transmitted through the path "the network device 121 → the network device 124 → the network device 125 → the network device 123". Regardless of which path is used to transmit the data packet X, the network device 123 may determine, based on an identifier of the i^{th} periodicity and the third periodicity parameter 6, that the fifth periodicity is an (i+6)^{th} periodicity, to forward the data packet X in the (i+6)^{th} periodicity. A possible maximum delay value of the data packet X is close to 7T, a possible minimum delay value is close to 5T, and a fluctuation range of the delay value is within 2T. In this way, the jitter of the packet flow can be controlled within 2T.

It can be learned from the foregoing descriptions that, if the first data packet includes identifiers of a plurality of periodicities, the identifiers may include the identifier of the third periodicity and the identifier of the fourth periodicity. The identifier of the third periodicity identifies a time point at which the second network device sends the first data packet, and the identifier of the fourth periodicity identifies a time point at which a network device on the first path (or the second path) sends the first data packet. In application scenarios such as a DIP scenario, the network device may add an identifier of a periodicity in which a data packet is forwarded to the data packet. For example, it is assumed that the first data packet includes a first field, where the first field may be for carrying the identifier of the fourth periodicity. Before forwarding the first data packet, each hop of network device on the transmission path may adjust a value of the first field to a periodicity corresponding to a time point at which the network device forwards the first data packet.

FIG. 1 is still used as an example for description. It is assumed that the network device 124 sends a data packet X to the network device 125 in an i^{th} periodicity, and a periodicity parameter of the network device 125 is 2. The network device 125 may forward the data packet X to the network device 123 in an (i+2)^{th} periodicity. If the data packet X sent by the network device 124 to the network device 125 may include an identifier of the i^{th} periodicity, before sending the data packet X, the network device 125 may replace the identifier of the i^{th} periodicity that is included in the data packet X with an identifier of the (i+2)^{th} periodicity.

It can be learned that a time interval between a time point at which the second network device sends a data packet and a time point at which the first network device receives the packet may be related to a network device on a transmission path of the data packet and a periodicity parameter of the network device. Therefore, in some possible implementations, if the first data packet includes identifiers of two or more periodicities, the network device may check the first data packet based on the identifiers of the periodicities.

Specifically, the first data packet received by the first network device may include the identifier of the third periodicity and an identifier of a sixth periodicity. The sixth periodicity is a periodicity to which a time point at which a fourth network device sends the first data packet belongs, and the fourth network device is a previous-hop network device of the first network device on the first path (or the second path). In other words, the first data packet is sent by the fourth network device to the first network device in the sixth periodicity through a connection to the first network device.

After receiving the first data packet, the first network device may determine a seventh periodicity based on the second correspondence and the identifier of the sixth periodicity. The second correspondence is a quantity of periodicities between a periodicity in which the fourth network device sends a data packet and a periodicity in which the first network device forwards the data packet, that is, a periodicity parameter of the first network device. The seventh periodicity is an earliest periodicity in which the first data packet can be forwarded by the first network device. In other words, the first network device forwards the first data packet in the seventh periodicity based on the sixth periodicity and the periodicity parameter of the first network device.

After determining the seventh periodicity, the first network device may determine whether the seventh periodicity matches the fifth periodicity. If the seventh periodicity matches the fifth periodicity, it indicates that a periodicity obtained through calculation based on the first correspondence and the identifier of the third periodicity matches a periodicity obtained through calculation based on the second correspondence and the identifier of the sixth periodicity, the first data packet is a normally transmitted packet, and the first network device may forward the first data packet in the fifth periodicity. If the seventh periodicity does not match the fifth periodicity, it indicates that a periodicity obtained through calculation based on the first correspondence and the identifier of the third periodicity does not match a periodicity obtained through calculation based on the second correspondence and the identifier of the sixth periodicity, an exception may occur in a transmission process of the first data packet, and the first network device may discard the first data packet.

That the seventh periodicity matches the fifth periodicity may include that the seventh periodicity is not later than the fifth periodicity. Optionally, in some possible implementations, the first periodicity parameter may be equal to the second periodicity parameter through explicit path planning or the like. In this case, that the seventh periodicity matches the fifth periodicity may include that the seventh periodicity is equal to the fifth periodicity, or there is a preset quantity of periodicities between the seventh periodicity and the fifth periodicity.

Optionally, to decrease a quantity of identifiers of periodicities, identifiers of periodicities such as the seventh periodicity that are updated by a network device on a transmission path may be recycled for using. In this case, that the seventh periodicity matches the fifth periodicity may include whether a remainder obtained by dividing a number of the fifth periodicity by a quantity of total periodicities in one cycle is equal to a number of the seventh periodicity. If the remainder is equal to the number of the seventh periodicity, the network device may determine that the data packet is a normally transmitted packet. Optionally, similar to the foregoing possible implementation, that the seventh periodicity matches the fifth periodicity may also include that a difference falls within a preset range, where the difference is between a remainder obtained by dividing a number of the fifth periodicity by a quantity of total periodicities in one cycle and a number of the seventh periodicity.

In the foregoing descriptions, the first periodicity parameter and the second periodicity parameter are obtained based on a detection packet sent by the second network device. In some other possible implementations, the first periodicity parameter and the second periodicity parameter may be determined based on a topology structure of a transmission path and a hop-by-hop periodicity parameter.

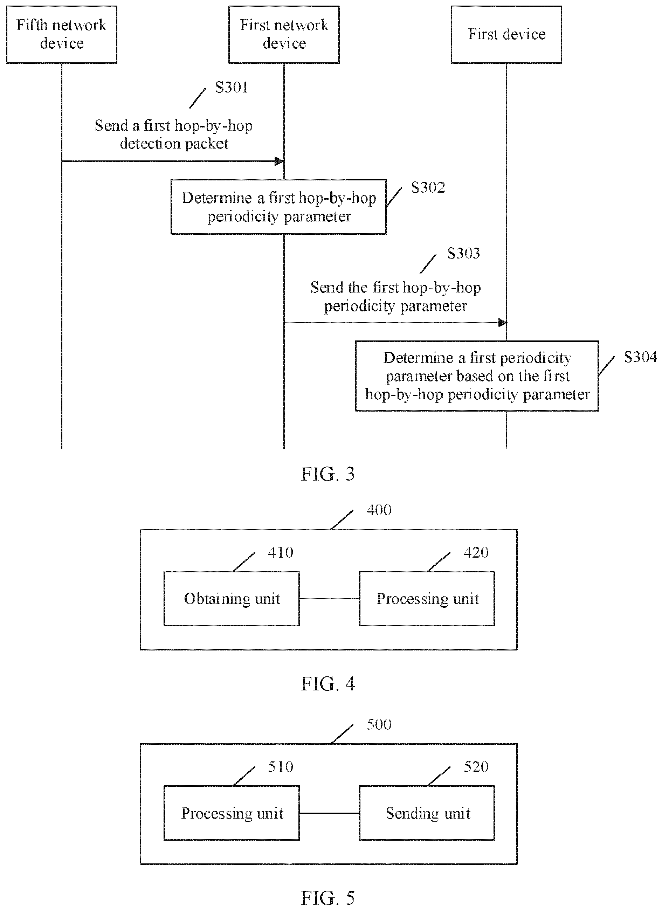

The following further describes the technical solutions provided in embodiments of this application with reference to FIG. 3 using the first periodicity parameter as an example. FIG. 3 is a diagram of signaling interaction of a method for determining a first periodicity parameter according to an embodiment of this application. The method includes the following steps.

S301. A fifth network device sends a first hop-by-hop detection packet to a first network device.

To determine the first periodicity parameter, the fifth network device may send the first hop-by-hop detection packet to the first network device. The fifth network device may be a previous-hop network device of the first network device. Optionally, if the fifth network device is a previous-hop network device of the first network device on a first path, the fifth network device may be the foregoing fourth network device.

In this embodiment of this application, the first detection packet may include an identifier of an eighth periodicity. The eighth periodicity is a periodicity to which a time point at which the fifth network device sends the first hop-by-hop detection packet to the first network device belongs. Optionally, the fifth network device may first determine a time point at which the first hop-by-hop detection packet can be sent, then add the identifier of the eighth periodicity that corresponds to the time point to the first hop-by-hop detection packet, and send the first hop-by-hop detection packet to the first network device in the eighth periodicity.

Optionally, the first hop-by-hop detection packet may include an identifier of the fifth network device, or may include an identifier of a first subpath. The subpath may be a transmission path between two directly connected network devices, and the first subpath may be a path between the fifth network device and the first network device. Optionally, in application scenarios such as a DIP scenario, the identifier of the first subpath or the identifier of the fifth network device may be carried using a segment identifier (Segment Identifier, SID) in the first detection packet.

In addition to the first hop-by-hop detection packet, the fifth network device may further send a hop-by-hop detection packet to another directly connected network device. For example, it is assumed that the fifth network device is further directly connected to a sixth network device. The fifth network device may send a second hop-by-hop detection packet to the sixth network device. In this embodiment of this application, a plurality of network devices in a network system may send a hop-by-hop detection packet to a network device directly connected to the plurality of network devices, to determine hop-by-hop periodicity parameters corresponding to a plurality of subpaths in the network system.

S302. The first network device determines a first hop-by-hop periodicity parameter based on the first hop-by-hop detection packet.

After receiving the first hop-by-hop detection packet sent by the fifth network device, the first network device may determine the first hop-by-hop periodicity parameter based on the first hop-by-hop detection packet. The first hop-by-hop periodicity parameter reflects a quantity of periodicities between a periodicity in which the fifth network device sends a data packet and a periodicity in which the first network device forwards the data packet. Optionally, the first network device may determine the first hop-by-hop periodicity parameter based on a time point at which the first hop-by-hop detection packet is received and the identifier of the eighth periodicity. Specifically, the first network device may determine the first hop-by-hop periodicity parameter using the method described in step S201. Details are not described herein again.

S303. The first network device sends the first hop-by-hop periodicity parameter to a first device.

After determining the first hop-by-hop periodicity parameter, the first network device may send the first hop-by-hop periodicity parameter to the first device. The first device may be a control device in the network system, or may be any network device in the network system. If the first device is a network device, step S304 may be performed by a control plane of the network device, for example, may be performed by a processor of the network device.

In this embodiment of this application, in addition to the first hop-by-hop periodicity parameter, the first network device may further send the identifier of the first subpath to the first device, to identify a subpath corresponding to the first hop-by-hop periodicity parameter. Alternatively, the first network device may further send the identifier of the fifth network device and an identifier of the first network device to the first device. In this way, the first device may determine, based on the identifier of the fifth network device and the identifier of the first network device, that the first hop-by-hop periodicity parameter corresponds to the first subpath.

S304. The first device determines the first periodicity parameter based on the first hop-by-hop periodicity parameter.

It can be learned from the foregoing descriptions that a plurality of network devices in the network system may send a hop-by-hop detection packet to a network device directly connected to the plurality of network devices, to determine hop-by-hop periodicity parameters corresponding to a plurality of subpaths. Correspondingly, the first device may obtain the plurality of hop-by-hop periodicity parameters sent by the plurality of network devices. Optionally, different hop-by-hop periodicity parameters may correspond to different subpaths. In this way, the first device may determine, based on a topology structure of the first path, one or more subpaths included in the first path. Then, the first device may select, from the received hop-by-hop periodicity parameters, one or more hop-by-hop periodicity parameters corresponding to the one or more subpaths, and determine the first periodicity parameter based on the selected hop-by-hop periodicity parameter.

For example, it is assumed that the first path includes k subpaths. The first device may select k target hop-by-hop periodicity parameters from the plurality of received hop-by-hop periodicity parameters. Each target hop-by-hop periodicity parameter corresponds to a subpath forming the first path. Then, the first device may determine the first periodicity parameter based on the k target hop-by-hop periodicity parameters. For example, the first device may sum up the k target hop-by-hop periodicity parameters, and use a result obtained through summation as the first periodicity parameter. Alternatively, the first device may correct the result obtained through the summation, and use a corrected result as the first periodicity parameter.

FIG. 1 is still used as an example for description. It is assumed that the network device 121 is a second network device, and the network device 123 is the first network device. The network device 121 may send a hop-by-hop detection packet a to the network device 122, and the network device 122 may send a hop-by-hop detection packet b to the network device 123. The network device 121 may further send a hop-by-hop detection packet c to the network device 124, the network device 124 may send a hop-by-hop detection packet d to the network device 125, and the network device 125 may send a hop-by-hop detection packet e to the network device 123.

After receiving the hop-by-hop detection packet, the network device 122 may determine a hop-by-hop periodicity parameter A based on a time point at which the hop-by-hop detection packet a is received and a periodicity to which a time point at which the network device 121 sends the hop-by-hop periodicity packet a belongs, where the hop-by-hop periodicity parameter A corresponds to a subpath "the network device 121 → the network device 122". The network device 123 may determine a hop-by-hop periodicity parameter B based on a time point at which the hop-by-hop detection packet b is received and a periodicity to which a time point at which the network device 122 sends the hop-by-hop periodicity packet b belongs, where the hop-by-hop periodicity parameter B corresponds to a subpath "the network device 122 → the network device 123". The network device 124 may determine a hop-by-hop periodicity parameter C based on a time point at which the hop-by-hop detection packet c is received and a periodicity to which a time point at which the network device 121 sends the hop-by-hop periodicity packet c belongs, where the hop-by-hop periodicity parameter C corresponds to a subpath "the network device 121 → the network device 124". The network device 125 may determine a hop-by-hop periodicity parameter D based on a time point at which the hop-by-hop detection packet d is received and a periodicity to which a time point at which the network device 124 sends the hop-by-hop periodicity packet d belongs, where the hop-by-hop periodicity parameter D corresponds to a subpath "the network device 124 → the network device 125". The network device 123 may determine a hop-by-hop periodicity parameter E based on a time point at which the hop-by-hop detection packet e is received and a periodicity to which a time point at which the network device 125 sends the hop-by-hop periodicity packet a belongs, where the hop-by-hop periodicity parameter E corresponds to a subpath "the network device 125 → the network device 13". After determining the hop-by-hop periodicity parameter corresponding to the subpath, the network device may send the hop-by-hop periodicity parameter to the first device (not shown in FIG. 1).

It is assumed that the first path is the transmission path "the network device 121 → the network device 124 → the network device 125 → the network device 123". To determine the first periodicity parameter, the first device may determine, based on the topology structure of the first path, that the first path includes the subpath "the network device 121 → the network device 124", the subpath "the network device 124 → the network device 125", and the subpath "the network device 125 → the network device 123". Then, the first device may select, from the sent plurality of hop-by-hop periodicity parameters, hop-by-hop periodicity parameters respectively corresponding to the three subpaths, to be specific, the hop-by-hop periodicity parameter C, the hop-by-hop periodicity parameter D, and the hop-by-hop periodicity parameter E. Finally, the first device may determine the first periodicity parameter based on the hop-by-hop periodicity parameter C, the hop-by-hop periodicity parameter D, and the hop-by-hop periodicity parameter E.

In this embodiment of this application, the first device may further determine a second periodicity parameter using a similar method, and determine a third periodicity parameter based on the first periodicity parameter and the second periodicity parameter, to generate a first correspondence. Then, the first device may send the first correspondence to the second network device and/or the first network device, so that the first network device forwards a packet in a first packet flow based on the third periodicity parameter, to control jitter of the packet flow. For descriptions of this part of content, refer to the descriptions of the embodiment corresponding to FIG. 2. Details are not described herein again.

Refer to FIG. 4. An embodiment of this application further provides a data processing apparatus 400. The data processing apparatus 400 may implement a function of the first network device in the embodiment shown in FIG. 2, or implement a function of the first device in the embodiment shown in FIG. 3. The data processing apparatus 400 includes an obtaining unit 410 and a processing unit 420. The obtaining unit 410 is configured to implement S201 in the embodiment shown in FIG. 2, and the processing unit 420 is configured to implement S202 and S204 in the embodiment shown in FIG. 2. Alternatively, the obtaining unit 410 is configured to perform the step of receiving the first hop-by-hop periodicity parameter in the embodiment shown in FIG. 3, and the processing unit 420 is configured to perform S304 in the embodiment shown in FIG. 3.

Specifically, the obtaining unit 410 is configured to obtain a first periodicity parameter and a second periodicity parameter, where the first periodicity parameter is determined based on duration of transmitting a packet from a first network device to a second network device along a first path, and the second periodicity parameter is determined based on duration of transmitting a packet from the first network device to the second network device along a second path.

The processing unit 420 is configured to determine a third periodicity parameter based on the first periodicity parameter and the second periodicity parameter, where the third periodicity parameter reflects a quantity of periodicities between a periodicity in which the first network device sends a data packet and a periodicity in which the second network device forwards the data packet, the data packet belongs to a packet flow, and the packet flow is transmitted along the first path and the second path.

For a specific execution process, refer to detailed descriptions of corresponding steps in the embodiment shown in FIG. 2 or FIG. 3. Details are not described herein again.

Refer to FIG. 5. An embodiment of this application further provides a packet sending apparatus 500. The packet sending apparatus 500 may implement a function of the second network device in the embodiment shown in FIG. 2. The packet sending apparatus 500 includes a processing unit 510 and a sending unit 520. The processing unit 510 is configured to obtain a first correspondence, and the sending unit 520 is configured to implement S203 in the embodiment shown in FIG. 2.

Specifically, the processing unit 510 is configured to obtain a first correspondence, where the first correspondence includes a correspondence between an identifier of a packet flow and a first periodicity parameter, the first periodicity parameter reflects a quantity of periodicities between a periodicity in which the first network device sends a data packet and a periodicity in which a second network device forwards the data packet, and the data packet belongs to the packet flow

The sending unit 520 is configured to send a first data packet to the second network device separately through a first path and a second path in a first periodicity, where the first data packet includes an identifier of the first periodicity, and the first data packet belongs to the packet flow.

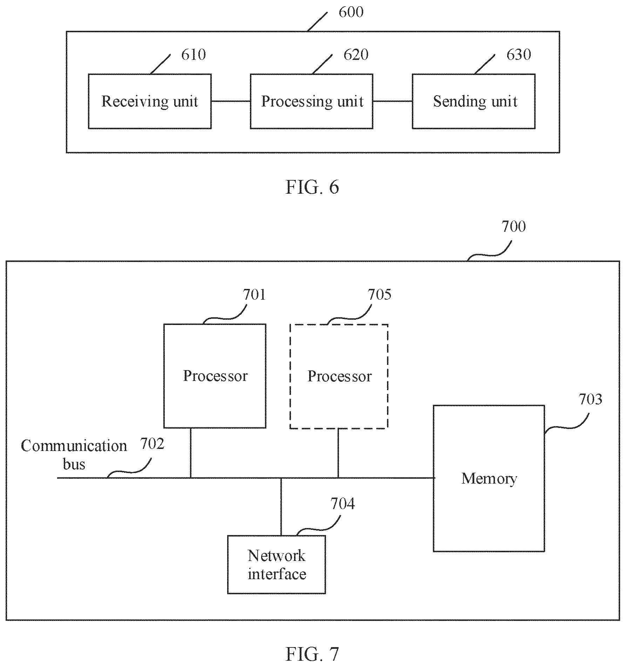

Refer to FIG. 6. An embodiment of this application further provides a packet sending apparatus 600. The packet sending apparatus 600 may implement a packet sending function. The packet sending apparatus 600 includes a receiving unit 610, a processing unit 620, and a sending unit 630. The receiving unit 610 is configured to receive a data packet, the processing unit 620 is configured to determine a time point at which the data packet is forwarded, and the sending unit 620 is configured to send the data packet.

Specifically, the receiving unit 610 is configured to receive a first data packet, where the first data packet belongs to a packet flow, the first data packet includes an identifier of the packet flow and an identifier of a first periodicity, and the first periodicity is a periodicity corresponding to a time point at which a second network device sends the first data packet.

The processing unit 620 is configured to: obtain a first correspondence and determine an identifier of a second periodicity based on the identifier of the first periodicity and a first periodicity parameter, where the first correspondence includes a correspondence between the identifier of the packet flow and the first periodicity parameter, the first periodicity parameter reflects a quantity of periodicities between a periodicity in which the second network device sends a data packet and a periodicity in which the first network device forwards the data packet, and the data packet belongs to the packet flow.

The sending unit 630 is configured to forward the first data packet in the second periodicity.

It should be noted that, in embodiments of this application, division into the units is an example and is merely a logical function division, and may be other division in actual implementation Functional units in embodiments of this application may be integrated into one processing unit, or each of the units may exist alone physically, or two or more units are integrated into one unit. For example, in the foregoing embodiments, the processing unit and the sending unit may be a same unit or different units. The integrated unit may be implemented in a form of hardware, or may be implemented in a form of a software functional unit.

FIG. 7 is a schematic diagram of a structure of a device 700 according to an embodiment of this application. The foregoing data processing apparatus 400, packet sending apparatus 500, and packet sending apparatus 600 may be implemented using the device shown in FIG. 7. Refer to FIG. 7. The device 700 includes at least one processor 701, a communication bus 702, and at least one network interface 704. Optionally, the device 700 may further include a memory 703.

The processor 701 may be a general-purpose central processing unit (Central Processing Unit, CPU), an application-specific integrated circuit (Application-specific Integrated Circuit, ASIC), or one or more integrated circuits (Integrated Circuits, ICs) configured to control program execution of the solutions of this application. The processor may be configured to process a packet or a periodicity parameter, to implement a data processing method and/or a packet sending method provided in embodiments of this application.

For example, when the first network device in FIG. 2 is implemented using the device shown in FIG. 5, the processor may be configured to: obtain a first periodicity parameter and a second periodicity parameter, where the first periodicity parameter is determined based on duration of transmitting a packet from a first network device to a second network device along a first path, and the second periodicity parameter is determined based on duration of transmitting a packet from the first network device to the second network device along a second path; and determine a third periodicity parameter based on the first periodicity parameter and the second periodicity parameter, where the third periodicity parameter reflects a quantity of periodicities between a periodicity in which the first network device sends a data packet and a periodicity in which the second network device forwards the data packet, the data packet belongs to a packet flow, and the packet flow is transmitted along the first path and the second path.

The communication bus 702 is configured to transmit information between the processor 701, the network interface 704, and the memory 703.

The memory 703 may be a read-only memory (Read-only Memory, ROM) or another type of static storage device that can store static information and instructions. The memory 703 may alternatively be a random access memory (Random Access Memory, RAM) or another type of dynamic storage device that can store information and instructions, or may be a compact disc read-only memory (Compact Disc Read-only Memory, CD-ROM) or another optical disc storage, an optical disc storage (including a compact disc, a laser disc, an optical disc, a digital versatile disc, a Blu-ray disc, and the like), a disk storage medium or another magnetic storage device, or any other medium that can be configured to carry or store expected program code in a form of instructions or a data structure and that can be accessed by a computer. However, the memory is not limited thereto. The memory 703 may exist independently, and is connected to the processor 701 through the communication bus 702. Alternatively, the memory 703 may be integrated with the processor 701.

Optionally, the memory 703 is configured to store program code or instructions for executing the technical solutions provided in embodiments of this application, and the processor 701 controls execution. The processor 701 is configured to execute the program code or the instructions stored in the memory 703. The program code may include one or more software modules. Optionally, the processor 701 may alternatively store the program code or the instructions for executing the technical solutions provided in embodiments of this application. In this case, the processor 701 does not need to read the program code or the instructions from the memory 703.

The network interface 704 may be an apparatus such as a transceiver, and is configured to communicate with another device or a communication network. The communication network may be an Ethernet, a radio access network (RAN), a wireless local area network (Wireless Local Area Network, WLAN), or the like. In this embodiment of this application, the network interface 504 may be configured to receive a packet sent by another node in a segment routing network, or may send a packet to another node in a segment routing network. The network interface 704 may be an Ethernet (Ethernet) interface, a fast Ethernet (Fast Ethernet, FE) interface, a gigabit Ethernet (Gigabit Ethernet, GE) interface, or the like.

In specific implementation, in an embodiment, the device 700 may include a plurality of processors, for example, the processor 701 and a processor 705 in FIG. 7. Each of the processors may be a single-core (single-CPU) processor, or may be a multi-core (multi-CPU) processor. The processor herein may be one or more devices, circuits, and/or processing cores configured to process data (for example, computer program instructions).

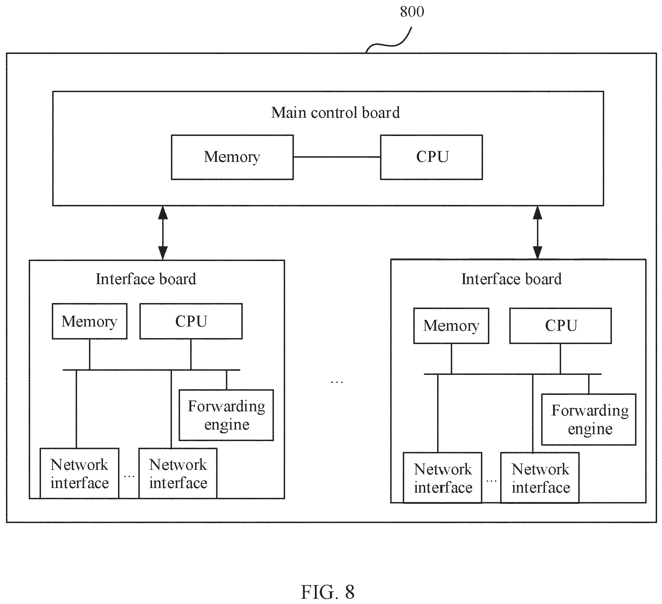

FIG. 8 is a schematic diagram of a structure of a device 800 according to an embodiment of this application. The devices in FIG. 2 or FIG. 3 may be implemented using the device shown in FIG. 8. Refer to the schematic diagram of the structure of the device shown in FIG. 8. The device 800 includes a main control board and one or more interface boards. The main control board is communicatively connected to the interface board. The main control board is also referred to as a main processing unit (Main Processing Unit, MPU) or a route processor card (Route Processor Card). The main control board includes a CPU and a memory, and is responsible for controlling and managing each component in the device 800, including route computation, and device management and maintenance functions. The interface board is also referred to as a line processing unit (Line Processing Unit, LPU) or a line card (Line Card), and is configured to receive and send a packet. In some embodiments, the main control board communicates with the interface board through a bus, or the interface boards communicate with each other through a bus. In some embodiments, the interface boards communicate with each other through a switching board. In this case, the device 800 also includes a switching board. The switching board is communicatively connected to the main control board and the interface boards, and is configured to forward data between the interface boards. The switching board may also be referred to as a switch fabric unit (Switch Fabric Unit, SFU). The interface board includes a CPU, a memory, a forwarding engine, and an interface card (Interface Card, IC). The interface card may include one or more network interfaces. The network interface may be an Ethernet interface, an FE interface, a GE interface, or the like. The CPU is communicatively connected to the memory, the forwarding engine, and the interface card. The memory is configured to store a forwarding information table. The forwarding engine is configured to forward a received packet based on the forwarding information table stored in the memory. If a destination address of the received packet is an IP address of the device 800, the forwarding engine sends the packet to the CPU of the main control board or the CPU of the interface board for processing. If a destination address of the received packet is not an IP address of the device 800, the forwarding engine searches the forwarding information table based on the destination address. If a next hop and an outbound interface that correspond to the destination address are found from the forwarding information table, the forwarding engine forwards the packet to the outbound interface corresponding to the destination address. The forwarding engine may be a network processor (Network Processor, NP). The interface card, also referred to as a subcard, may be installed on the interface board. The interface card is responsible for converting an optical/electrical signal into a data frame, checking validity of the data frame, and forwarding the data frame to the forwarding engine for processing or the CPU of the interface board. In some embodiments, the CPU may also perform a function of the forwarding engine, for example, implementing software forwarding based on a general-purpose CPU, so that no forwarding engine is required in the interface board. In some embodiments, the forwarding engine may be implemented using an ASIC or a field programmable gate array (Field Programmable Gate Array, FPGA). In some embodiments, the memory that stores the forwarding information table may alternatively be integrated in the forwarding engine, and is used as a part of the forwarding engine.

An embodiment of this application further provides a chip system, including: a processor. The processor is coupled to a memory, the memory is configured to store a program or instructions. When the program or the instructions are executed by the processor, the chip system is enabled to implement the data processing method and the packet sending method that are performed by the first network device in the embodiment shown in FIG. 2, or the chip system is enabled to implement the data processing method performed by the first device in the embodiment shown in FIG. 3, or the chip system is enabled to implement the packet sending method performed by the first network device in the embodiment shown in FIG. 3.

Optionally, there may be one or more processors in the chip system. The processor may be implemented using hardware, or may be implemented using software. When the processor is implemented using the hardware, the processor may be a logic circuit, an integrated circuit, or the like. When the processor is implemented using the software, the processor may be a general-purpose processor, and is implemented by reading software code stored in the memory.

Optionally, there may also be one or more memories in the chip system. The memory may be integrated with the processor, or may be disposed independent of the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be an FPGA, an ASIC, a system on chip (System on Chip, SoC), a CPU, an NP, a digital signal processor (Digital Signal Processor, DSP), a micro controller unit (Micro Controller Unit, MCU), a programmable logic device (Programmable Logic Device, PLD), or another integrated chip.

It should be understood that steps in the foregoing method embodiments may be implemented using a hardware integrated logic circuit or instructions in a software form in the processor. The steps of the method disclosed with reference to embodiments of this application may be directly performed by a hardware processor, or may be performed using a combination of hardware in the processor and a software module.

An embodiment of this application further provides a computer-readable storage medium, including instructions. When the instructions are run on a computer, the computer is enabled to perform the data processing method performed by the first device that is provided in the foregoing method embodiments, or the computer is enabled to perform the packet sending method performed by the network device that is provided in the foregoing method embodiments.

An embodiment of this application further provides a computer program product including instructions. When the computer program product runs on a computer, the computer is enabled to perform the data processing method performed by the first device that is provided in the foregoing method embodiments, or the computer is enabled to perform the packet sending method performed by the network device that is provided in the foregoing method embodiments.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by persons skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical module division and may be other division in actual implementation. For example, a plurality of units or components may be combined or integrated into another system, or some features may be ignored or not performed. In addition, the displayed or discussed mutual coupling or direct coupling or communication connection may be implemented through some interfaces. The indirect coupling or communication connection between the apparatuses or units may be implemented in an electrical, mechanical, or another form.

The units described as separate parts may or may not be physically separate, and parts displayed as units may or may not be physical units, may be located in one position, or may be distributed on a plurality of network units. Some or all of the units may be obtained according to actual requirements to achieve the objectives of the solutions of embodiments.

In addition, module units in embodiments of this application may be integrated into one processing unit, or each of the units may exist alone physically, or two or more units are integrated into one unit. The integrated unit may be implemented in a form of hardware, or may be implemented in a form of a software module unit.

When the integrated unit is implemented in the form of a software module unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

Persons skilled in the art should be aware that in the foregoing one or more examples, functions described in the present invention may be implemented by hardware, software, firmware, or any combination thereof. When the present invention is implemented by software, the foregoing functions may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any available medium accessible to a general-purpose or dedicated computer.

The objectives, technical solutions, and beneficial effects of the present invention are further described in detail in the foregoing specific implementations. It should be understood that the foregoing descriptions are merely specific implementations of the present invention.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A data processing method, wherein the method comprises:
obtaining, by a first device, a first periodicity parameter and a second periodicity parameter, wherein the first periodicity parameter is determined based on duration of transmitting a packet from a first network device to a second network device along a first path, and the second periodicity parameter is determined based on duration of transmitting a packet from the first network device to the second network device along a second path; and
determining, by the first device, a third periodicity parameter based on the first periodicity parameter and the second periodicity parameter, wherein the third periodicity parameter reflects a quantity of periodicities between a periodicity in which the first network device sends a data packet and a periodicity in which the second network device forwards the data packet, the data packet belongs to a packet flow, and the packet flow is transmitted along the first path and the second path.

2. The method according to claim 1, wherein the determining, by the first device, a third periodicity parameter based on the first periodicity parameter and the second periodicity parameter comprises:
determining, by the first device, the third periodicity parameter based on a larger periodicity parameter of the first periodicity parameter and the second periodicity parameter.

3. The method according to claim 1 or 2, wherein the obtaining, by a first device, a first periodicity parameter comprises:
determining, by the first device, a plurality of target hop-by-hop periodicity parameters based on a topology structure of the first path, wherein the target hop-by-hop periodicity parameter is a quantity of periodicities between periodicities corresponding to time points at which two adjacent network devices on the first path send a packet; and
determining, by the first device, the first periodicity parameter based on the plurality of target hop-by-hop periodicity parameters.

4. The method according to any one of claims 1 to 3, wherein the method further comprises:
generating, by the first device, a first correspondence based on the third periodicity parameter, wherein the first correspondence comprises a correspondence between an identifier of the packet flow and the third periodicity parameter.

5. The method according to any one of claims 1 to 4, wherein the packet flow comprises a first packet, the first device is the first network device, and the method further comprises:
sending, by the first device, the first packet in a first periodicity through the first path, wherein the first packet comprises an identifier of the first periodicity and a first sequence identifier, and the first sequence identifier identifies a sequence of the first packet in the packet flow.

6. The method according to claim 5, wherein the first packet comprises an identifier of a second periodicity, and before the sending the first packet, the method further comprises:
determining, by the first device, the identifier of the second periodicity based on the identifier of the first periodicity and the third periodicity parameter, wherein the second periodicity is a periodicity to which a time point at which the second network device forwards the first packet belongs.

7. The method according to claim 5 or 6, wherein before the obtaining a first periodicity parameter, the method further comprises:
generating, by the first device, a first detection packet, wherein the first detection packet comprises an identifier of a third periodicity; and
sending, by the first device, the first detection packet to a third network device in the third periodicity, wherein the third network device is a next-hop network device of the first network device on the first path.

8. The method according to any one of claims 1 to 4, wherein the packet flow comprises a second packet, the first device is the second network device, and the method further comprises:
obtaining, by the first device, the second packet, wherein the second packet is sent by the first network device to the first device through the first path and/or the second path, the second packet comprises an identifier of a fourth periodicity, and the fourth periodicity is a periodicity corresponding to a time point at which the first network device sends the second packet;
determining, by the first device, an identifier of a fifth periodicity based on the identifier of the fourth periodicity and the third periodicity parameter; and
forwarding, by the first device, the second packet in the fifth periodicity.

9. The method according to claim 8, wherein the second packet comprises a second sequence identifier, the second sequence identifier identifies a sequence of the second packet in the packet flow, and before the forwarding the second packet, the method further comprises:
determining, by the first device, that a packet that corresponds to the second sequence identifier and that is in the packet flow has not been forwarded.

10. The method according to claim 8 or 9, wherein before the obtaining a first periodicity parameter, the method further comprises:
receiving, by the first device, a second detection packet, wherein the second detection packet is sent by the first network device to the first device through the first path, the second detection packet comprises an identifier of a sixth periodicity, and the sixth periodicity is a periodicity corresponding to a time point at which the first network device sends the second detection packet; and
the obtaining, by a first device, a first periodicity parameter comprises:
determining, by the first device, the first periodicity parameter based on the identifier of the sixth periodicity and a time point at which the second detection packet is received.

11. A packet sending method, wherein the method comprises:
obtaining, by a first network device, a first correspondence, wherein the first correspondence comprises a correspondence between an identifier of a packet flow and a first periodicity parameter, the first periodicity parameter reflects a quantity of periodicities between a periodicity in which the first network device sends a data packet and a periodicity in which a second network device forwards the data packet, and the data packet belongs to the packet flow; and
sending, by the first network device, a first data packet to the second network device separately through a first path and a second path in a first periodicity, wherein the first data packet comprises an identifier of the first periodicity, and the first data packet belongs to the packet flow.

12. A packet sending method, wherein the method comprises:
obtaining, by a first network device, a first correspondence, wherein the first correspondence comprises a correspondence between an identifier of a packet flow and a first periodicity parameter, the first periodicity parameter reflects a quantity of periodicities between a periodicity in which a second network device sends a data packet and a periodicity in which the first network device forwards the data packet, and the data packet belongs to the packet flow;
receiving, by the first network device, a first data packet, wherein the first data packet belongs to the packet flow, the first data packet comprises the identifier of the packet flow and an identifier of a first periodicity, and the first periodicity is a periodicity corresponding to a time point at which the second network device sends the first data packet;
determining, by the first network device, an identifier of a second periodicity based on the identifier of the first periodicity and the first periodicity parameter; and
forwarding, by the first network device, the first data packet in the second periodicity.

13. A first device, wherein the first device comprises a processor and a memory, the memory is configured to store instructions or program code, and the processor is configured to invoke the instructions or the program code from the memory and run the instructions or the program code, to perform the data processing method according to any one of claims 1 to 10.

14. A network device, wherein the network device comprises a processor and a memory, the memory is configured to store instructions or program code, and the processor is configured to invoke the instructions or the program code from the memory and run the instructions or the program code, to perform the packet sending method according to claim 11.

15. A chip, comprising a memory and a processor, wherein the memory is configured to store instructions or program code, and the processor is configured to invoke the instructions or the program code from the memory and run the instructions or the program code, to perform the data processing method according to any one of claims 1 to 10, or perform the packet sending method according to claim 11.
